# EUROPEAN PATENT SPECIFICATION

(11) **EP 3 996 114 B1**
(45) Date of publication and mention of the grant of the patent: **07.10.2026**
(21) Application number: 21215922.2
(22) Date of filing: 07.06.2019
(51) Int. Cl.: H01B 7/30, H01B 9/00, H02J 3/18

(54) **LAYERED CABLE**
GESCHICHTETES KABEL
CÂBLE À COUCHES

(30) Priority: 07.06.2018 GB 201809392; 29.06.2018 GB 201810702
(43) Date of publication of application: 11.05.2022
(62) Document number(s) of the earlier application(s) in accordance with Art. 76 EPC: 19739682.3 / 3 803 912
(73) Proprietor: Enertechnos Limited, Kingston Upon Thames, Surrey KT1 3GZ (GB)
(72) Inventor: SALEHI-MOGHADAM, Mansour, Kingston Upon Thames, KT2 7AS (GB); O'BRIEN, Gareth, Ashbourne, A84 H563 (IE); LUCAS-CLEMENTS, Charles, East Horsley, KT24 5EG (GB); QUENNELL, Dominic, London, SW17 7EB (GB)
(74) Representative: Schlich

(56) References cited:
- CN-A- 106 384 625
- CN-U- 205 508 493
- US-A- 3 164 669
- US-A- 4 204 129
- ANONYMOUS: "Capacitative transfer promises significant reduction in losses - Modern Power Systems", 15 May 2018 (2018-05-15), XP055617970, Retrieved from the Internet <URL:https://www.modernpowersystems.com/features/featurecapacitative-transfer-promises-significant-reduction-in-losses-6150871/> [retrieved on 20190903]

## Description

The present invention relates to a capacitive power transmission cable system.

US Patent No. 1,825,624 describes and claims:
1. In an electrical power transmission system, a source of alternating current, a receiving circuit, a transmission circuit for interconnecting said source and said receiving circuit and a distributed capacitance interposed in series relation with said transmission circuit and having a value sufficient substantially to neutralize the inductive reactance of said transmission circuit for increasing the power limit of said system.

The abstract of US Patent No. 4,204,129 is as follows:
This invention relates to the transmission of electric power and in particular provides an electric power-transmission system having reduced vector regulation, voltage drop, and power loss through the inclusion of capacitance in the cable in series between the generator and load by utilizing electric conductors, i.e., connective links, having capacitance distributed along the length of the cable. Such capacitance is achieved by dividing a conductor into two parts which are separated by dielectric material such that the two conductor parts are in capacitive relation along the length of the cable and by connecting one conductor part to the generator and the other conductor part to the load such that the distributed capacitance is in series with the generator and load.

In WO 2010/026380 there is described, in terms of its abstract and with reference to Figure 0 - Prior Art - hereof:
A charge transfer zero loss power and signal transmission cable comprising, eight lengths of an electric conducting material (18), being layered in alignment, one on top of the other, each of which can be electrically jointed to give any required length. Each of the conductive layers is separated from each other by alternate layers of a dielectric material (19). The conductive layers (10-17) are formed into a charging folded closed loop (20) and a discharging folded closed loop (21) with the apex of the fold (22) of each folded closed loops in opposition to each other, being the ends of the cable, are separated from each other by a dielectric material (19), thereby making capacitive contact and is the means to transfer an electric charge from the said charging loop to the discharging loop, thereby transmitting an alternating current from a power supply to a point of transmission, with substantially zero resistance, by the said two charging and discharging loops, thereby transmitting power from a power supply over a given distance, to a point of transmission with zero power loss.

It is surprising that is capable of transmitting data and/or power over a long distance with low, if not completely zero loss. Our tests have confirmed this.

For this cable, the loop formation is taught to be essential. We believe that the loop formation is not essential.

Litz wires and Milliken conductors are known and consist respectively of fine wire strands and thicker wire strands insulated from each other, typically by so called "enamel" which is polymer based as used on magnet wire, and bundled together usually with twisting. They reduce skin effect which would reduce the conductive capacity of a single round conductor with the same amount of conductive material per unit length. In Milliken conductors, the wires are not always insulated from each other, particularly where they are arranged in six segments insulated from each other. The normal extent of insulation of the wires from each other in Milliken conductors is "light"¹.

Litz wires and Milliken conductors are not suitable as such since the former are suitable for light duty and Milliken conductors have only light insulation.

US Patent No. US 3,164,669 describes a cable conductor for pipe cable which has good solderability and a lower combined skin effect and proximity effect loss than conventional concentrically stranded cable in the same environment.

CN 205508493U describes an energy saving and large sized conductor for decreasing loss suitable for use in submarine cable.

CN 106384625 A discloses an enameled wire stranded conductor suitable for an AC high-voltage cable and a sea cable.

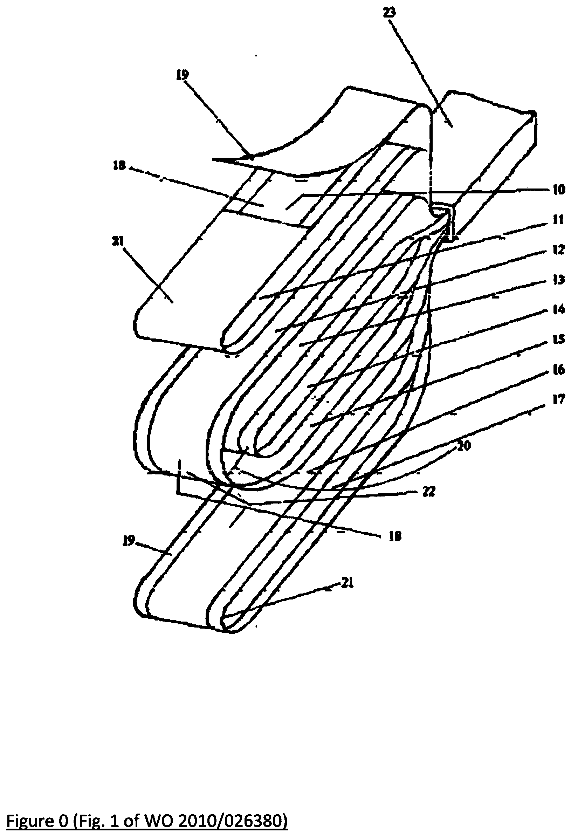

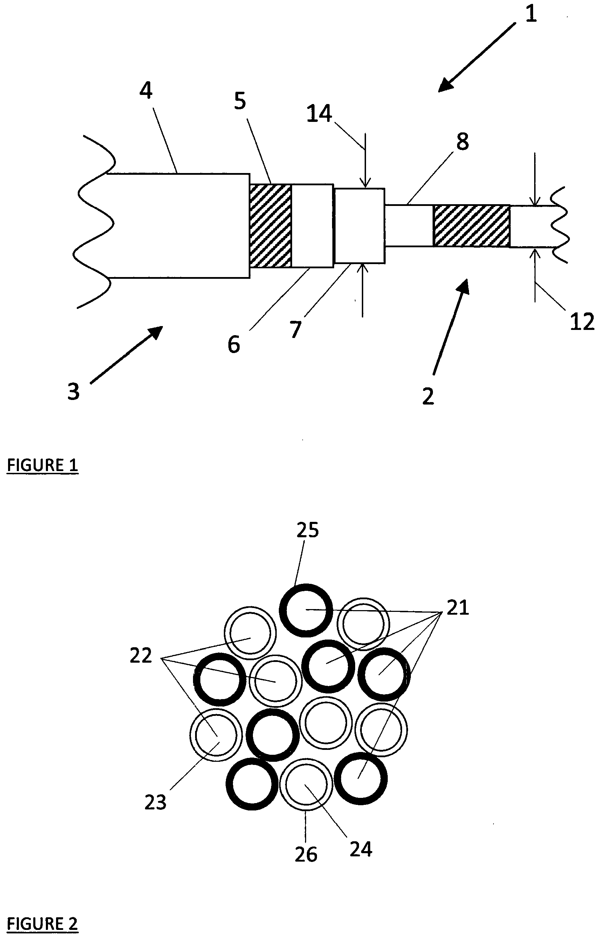

In a Modern Power Systems paper entitled "Capacitive transfer promises significant reduction in losses" dated 15 May 2018 and available at https://www.modernpowersystems.com/features/featurecapacitative-transfer-promises-significant-reduction-in-losses-6150871/, there is described with reference to Figure 2 of this paper, the figure being "A cross sectional representation of a Type **III** cable.":

*Each of the individual bundles comprises 6 upstream electrodes (connected to supply) and* 6 *downstream electrodes (connected to load). Each bundle is composed of twisted, insulated wires and then the bundles are twisted* as *a group to form a cable which is then sheathed according to applicable international standards.*

The object of the present invention is to provide an improved capacitive, power transmission cable.

Claimed herein, there is a capacitive, power transmission cable system comprising:
- a cable having at least two sets of conductive strands, the conductive strands being
   - laid in layers of opposite twist, with
   - the strands of one or more adjacent layers being of all one set and then radially outwards the strands of one or more adjacent layers being of all another set and
- insulation between the layers of different sets, whereby the at least two sets are in capacitive relation to each other, and

a first connector block and a second connector block connected in use to the sets of strands forming the cable at respective ends of the cable:
   characterised in that:
   - the first connector block is provided with a first terminal connected in use to a supply terminal and a second terminal isolated without a supply or load terminal;
   - the second connector block is provided with a first terminal isolated without a supply or load terminal and a second terminal connected in use to a supply or load terminal;
   - at least one set of strands is connected at one end of the cable to the first supply connection terminal of the first connector block, and at the other end of the cable to the first isolated terminal of the second connector block; and
at least another set of strands is connected at one end of the cable to the second isolated terminal of the first connector block, and at the other end of the cable to the second load connection terminal of the second connector block.

The invention also provides use of the capacitive power transmission cable as described above for transmitting power.

Disclosed herein, but not claimed is a capacitive power transmission cable comprising at least two sets of conductive strands, the sets of strands being insulated from each other and in capacitive relationship, the one with the other.

Preferably, the capacitance is at least 10 nF/m.

Also disclosed herein, but not claimed is a capacitive, power transmission cable comprising:
- at least two sets of conductive strands, the strands of the sets being distributed in transverse cross-section of the cable, whereby the two sets are in capacitive relation to each other and
all of the strands of at least one of the sets having:
- a respective insulation coating of a dielectric strength to enable the sets of conductive strands to remain isolated.

Normally there will be more than four strands per set, preferably between 19 and 547 and normally between 37 and 397.

Normally the strands will be laid in layers of opposite twist. Further the strands of the two, or more sets, are preferably alternated in their layers.

The cable can be provided with an outer sheath which can include an armouring of spirally laid steel wires. The armouring can be an earth conductor.

Alternatively, the strands can be laid in alternating layers of all one set and then all another set.

Conveniently, the insulation is of the type used in so called "magnet wire" and is at least 18µm thick, and preferably it is between 24µm and 262µm thick and normally between 26µm and 190µm thick.

Also disclosed herein, but not claimed is a capacitive, power transmission cable comprising:
- at least two sets of conductive strands and

all of the strands of at least one of the sets having:
   - a respective insulation coating, whereby the two sets are in capacitive relation to each other,
the conductive strands being laid in layers of opposite twist, with strands of at least two sets in each layer.

The insulation can be extruded, wound or woven, but are preferably of enamel typically of the type used in so called "magnet wire".

Further the strands of the two, or more sets, are preferably alternated in their layers.

In all three aspects, whilst one of the sets of conductive strands can be uninsulated, with the insulation of the strands of the other set providing the isolation, preferably both all of strands have their own insulation.

Preferably the respective insulations of the sets will be differently coloured to allow their separation for connection at opposite ends of the cable. Where more than two sets of strands are provided, they will each have a respective colour.

Additionally to their insulation, the strands will normally be provided with soft polymer insulation between each layer to fill interstices between individual strands.

Whilst the individual strands could be insulated, with different colours for aiding their identification, they need not be in this aspect. Otherwise, they are preferably differently coloured as by tinning of one set and leaving the other set untinned.

The interlayer insulation is preferably of polymer tape and is preferably between 25µm and 2.7mm thick and normally between 30µm and 1.35mm thick.

In the previous aspects, the strands will normally be compressed, as by passing through a die, after addition of each layer. The degree of die compression is controlled to avoid damage to the insulation where provided at contact with the outer periphery of the strands.

The conductors will normally be copper or aluminium wire. Normally the insulation will be so called enamel, as used in so-called magnet wire.

As with conventional power transmission cables, the power capacity of the cable dictates the conductor total cross-sectional area of cables of the invention. At the ends of the cable most of the current will be carried by one or other of the two sets of strands. If the each set of strands were to have the conventional cross-sectional area of conductor, the cable would use twice as much conductor metal. However, the amount of conductor can be modified at either end by increasing the proportion of one set at one end and the other at the other. This can be done by reducing the number of strands in one set and increasing the number of strands in the other. Alternatively in the case of the layers being of alternating sets, an extra, outer layer of one set can be included. The former uses the same amount of conductor and the latter uses more conductor. It is anticipated that this can be at the ends only, in one or two portions of cable, typically 250m to 400m in length for buried cable, the balance of the cable being of normal cable portions. The portions can be joined as described below. Where for instance the cable is subsea cable, the majority of it can be laid up as one long portion without connectors. This is particularly convenient with layered cable in which all the strands of one layer are of one set and all of them of another are of another set. With the strands within the sets being uninsulated in their layers, although insulated layer from layer, since new lengths of strand can be incorporated progressively in the lay-up. Further we expect the minimum conductor cross-sectional area to be 50mm².

Also disclosed herein, but not claimed is a capacitive, power transmission cable comprising at least two sets of conductive strands, the sets of strands being insulated from each other and in capacitive relationship, the one with the other, and the capacitance being at least 10 nF/m.

Preferably the capacitance between the sets of strands is within the range 25 to 360nF/m for a 240 volt cable and 13 to 187nF/m for a 145kV cable and particularly within the range 22 to 317nF/m for a 3.6kV cable and 14.5 to 209nF/m for a 72.5kV cable. It will be noted that counter-intuitively, due to the geometry of the lay-up of the strands and their diameter, the achievable capacitance between the set of them falls with increasing rated voltage. **It** should be noted that the invention is not restricted to 145kV cables. Higher voltage cables can be envisaged.

Where, as envisaged to be possible, both electrode sets of conductors have identical enamel insulation, they will not be visually distinguishable. However, it is envisaged that they can identified individually at one end by application of an electrical signal to them at the other. Conveniently, the conductors will be grouped together into one electrode set at the other end, and indeed preferably be connected together, with the signal applied and then sorted at the one end to identify the other electrode according to whether the signal is present or not on individual conductors.

Normally and particularly where layers are insulated from each other, the layers will be of single conductor diameter thickness. However, it can be envisaged that the layers may comprise two sub-layers of conductors, conveniently one laid one way and the other. Indeed, the sub-layers within each layer could be combined by braiding.

Also disclosed herein, but not claimed is a capacitive, power transmission cable comprising:
- at least two sets of conductive strands, the sets of strands being insulated from each other and in capacitive relationship, the one with the other,
- insulation around the capacitively connected sets of strands, and
- a grounding sheath around the insulation, the grounding sheath being in capacitive connection with the capacitively connected sets of strands, with the insulation being sufficiently thick to act as a dielectric causing conductive strands to sheath capacitance to be substantially two orders of magnitude, or more, less than capacitance between the two sets of strands.

It happens that conventional insulation and sheath to core capacitance, typically 8mm of polyethylene, does provide the two orders of magnitude less capacitance in practice.

For connection of a capacitive, power transmission cable to supply and load conductors, a connector block is provided with terminals for the first and second sets of conductors. One terminal in each block is isolated without a supply or load connection terminal, whilst the other is provided with a supply or load terminal. The blocks facilitate connection of the cable as a capacitive cable, with one set of conductors connected in use to the supply and the other set of conductors connected at the other end to the load. Either or both of the supply and load connectors can have bus-bars permanently connect to the supply and load terminals. Indeed, such bus-bars can comprises these connectors.

For connection of two lengths of cable of the invention, two alternative connectors will be provided. A parallel-connection one will be provided with respective terminals for respective sets of conductors on both sides and with internal interconnections, whereby the one conductors of one length can be connected to the one conductors of the other length and the other conductors similarly connected. A series-connection connector has a terminal on one side for one set connected internally to a terminal on the other side for one or other set of the other length. The remaining sets are terminated in isolated terminals on the respective side of the connector.

A long run of cable is anticipated to have its capacitance determined by use of parallel connectors between certain lengths and series connectors between other lengths.

Cables with three or more sets of cables can be used to further choose the capacitance of the cable, by adding conductors of a third set in parallel to those of the first set for instance and of a fourth set in parallel to those of the first set, the third and fourth sets being capacitively connected.

Alternatively, or in addition, a separate set of conductors can be connected at both ends to provide a straight through connection.

To help understanding of the invention, a various specific embodiment thereof will now be described by way of example and with reference to the accompanying drawings, in which:
Figure 1 is a side view of a short piece of partially stripped cable of the invention;
Figure 2 is a diagrammatic view of a transverse cross-sectional view of the conductor sets of a simple conductor of the invention, without an outer sheath;
Figure 3 is a view similar to Figure 2 of a seven layer cable of the invention having conductor strands of two sets alternated with layers;
Figure 4 is another similar view of a five layer cable in which sets of strands alternate in layers;
Figure 5 is a variant of the cable of Figure 4 with six layers;
Figure 6 is a diagram of the cable of Figure 2 provided with similar connectors at both ends for parallel connection of the cable with other such cables;
Figure 7 is a diagram of the cable of Figure 2 provided with bus-bar connectors at its end;
Figure 8 is a parallel connector for a pair of cables of the invention;
Figure 9 is a series connector for a pair of cables of the invention;
Figure 10 is a cable end connector for a cable of the invention;
Figure 11 is a chart of typical dielectric strength for a selection of common enamel coatings;
Figure 12 is a chart of typical strength for a selection of common films/tapes;
Figure 13 is a chart of the minimal enamel thickness in mm against voltage in kV;
Figure 14 is a chart of the preferred lower enamel thickness in mm against voltage in kV;
Figure 15 is a chart of the preferred upper enamel thickness in mm against voltage in kV;
Figure 16 is chart of the maximum enamel thickness in mm against voltage in kV;
Figure 17 is chart of the combination of Figures 13 to 16;
Figure 18 is a chart of the minimum capacitance in nF/m against voltage in kV;
Figure 19 is a chart of the preferred lower capacitance in nF/m against voltage in kV;
Figure 20 is a chart of the preferred upper capacitance in nF/m against voltage in kV;
Figure 21 is a chart of the maximum capacitance in nF/m against voltage in kV; and
Figure 22 is a chart of the combination of Figures 17 to 21.

Referring to the drawings, a power transmission cable 1 has copper strands 2 within a sheath 3. The sheath is generally conventional, having an outer protective polymer layer 4, a steel/copper wire protective grounding layer 5, a semi-conductive layer 6 and an insulating layer 7 and a semi-conductive layer 8. The copper conductive strands are in accordance with the invention.

Typically in a cable intended to operate at 33kV with a cross section of typically 300mm², the copper strands 2 have a lay-up diameter 12 typically of 16mm. The insulation layer is typically 8mm thick giving a diameter 14 of 32mm and a ratio of 2:1. With the conductive strands having a typical capacitance between their set of 120nF/m and the capacitance to ground of the strands in *toto* typically being 0.3nF/m, this gives a capacitance to ground of two orders of magnitude less than that between the two sets of strands.

Further the insulation between the strands or layers thereof is typically 0.1 - 0.2 mm, giving a typical ratio of insulator to ground thickness to inter-strand insulator thickness of 40:1 - 80:1.

There are two sets 21,22 of the copper strands. Within each set, the strands 23,24, have respectively differently coloured, typically red and green, insulating enamel 25,26, of the type used in production of so-called "magnet wire", i.e. copper wire coated with insulating polymeric material to provide insulation between contiguous windings in an electromagnetic machine.

The strands are typically laid up as follows:
Layer 1: two red strands 23 & two green strands 24, twisted clockwise;
Layer 2: five red strands 23 & five green strands 24, twisted anti-clockwise;
Layer 3: eight red strands 23 & eight green strands 24, twisted clockwise;
Layer 4: eleven red strands 23 & eleven green strands 24, twisted anti-clockwise;
Layer 5: fourteen red strands 23 & fourteen green strands 24, twisted clockwise;
Layer 6: seventeen red strands 23 & seventeen green strands 24, twisted anti-clockwise;
Layer 7: twenty red strands 23 & twenty green strands 24, twisted clockwise.

The layers are laid with a conventional cable winding machine, with the bobbins of red and green strands for the individual layers alternated. Between each layer is wound soft polymeric material 27. After each layer is laid, the strands of the last laid layer are squeezed against this material, to urge it to fill the interstices between the strands. Again this is an essentially conventional step save that the dies, through which the strands are passed for this compression, are marginally larger than would otherwise be the case to avoid damage to the enamel.

The strands are in intimate contact with each other, separated only by the thickness of their enamel coatings, and the soft polymer filling the interstices of between them, as when three strands lie in equilateral triangular arrangement.

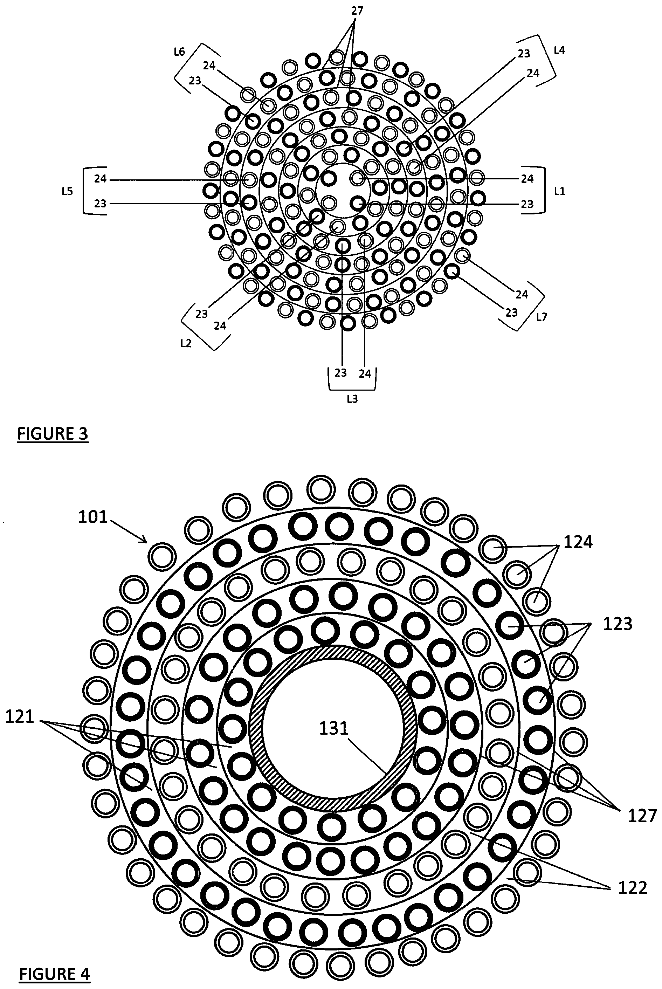

With reference to Figure 3, it should be noted that although the figure shows several strands aligned with others of the same set, this figure is a cross-section at a particular point along the cable. Due to the opposite twisting of adjoining layers, cross-sectional arrangement of the strands is different at different points along the cable. The arrangement provides that the strands of the two sets are in capacitive relationship with each other.

Turning now to Figure 4, the power transmission cable 101 there shown has two sets 121,122 of the copper strands 123,124, having respectively differently coloured insulating enamel, and inter layer insulation 127. The strands are laid in oppositely twisted layers of all one or the other set. A central polymeric former 131 is provided, which is hollow for accommodating data fibres, such as temperature sensing optical fibres (not shown). The strands are laid as follows:
Layer 1: sixteen red strands 123;
Layer 2: twenty two red strands 123;
Layer 3: twenty eight green strands 124;
Layer 4: thirty four red strands 123;
Layer 5: forty green strands 124.

In this cable, the capacitive relationship comes from the radial alternation strands of the two sets. The reason for the additional Layer 1 of strands of the same colour/set as the next Layer 2, is that without it the total count of red strands 123 would be considerably less than that of the green strands 124, with the result that former would be carrying considerably more current at the end of the cable having these strands connected as now described.

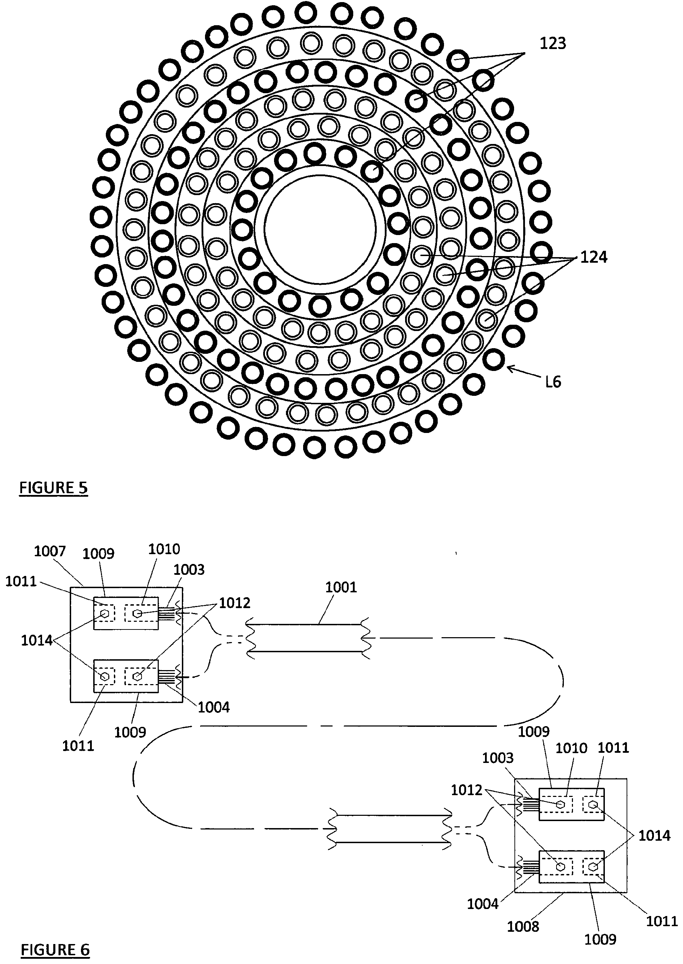

A variant of the second transmission cable is shown in Figure 5. In it, it is not the inside two layers that are of the same set, but the second and third layers. The number of strands per layer of the different strands is
Layer 1: sixteen red strands 123;
Layer 2: twenty two green strands 124;
Layer 3: twenty eight green strands 124;
Layer 4: thirty four red strands 123;
Layer 5: forty green strands 124;
Layer 6: forty six red strands 123.

This cable has the further layer 6, increasing its power transmission capability.

For choice of the capacitance per unit length of the cable, account is taken of the inductance of the cable and other components of the electrical supply system of which the cable is part, with a view to balancing this inductance with the capacitance of the cable. More specifically, the following steps are gone through:
1. Selecting an initial cable size in accordance with the voltage and current that the cable is to carry, in particular, the cross-sectional area of metal to be included in the core; and on a first iteration the number of enamelled wires and/or the number of layers; and the length (l):
2. Computing the design inductance of the cable (L_{D}) and the resistance of the cable (R) using computer simulation and modelling and including in particular its inherent inductance and any mutual inductance that may result from its inclusion in a 3-phase system, as if it were a conventional cable if need be:
3. Noting that for the inductive reactance for the cable resulting from L_{D} is given by the Inductive Reactance Equation: ${X}_{L} = 2 π {fL}_{D}$ where f equals the operating frequency in Hz, normally 50 or 60 Hz;
4. Noting that for the capacitive reactance of the cable, for a capacitance C is given by the Capacitve Reactance Equation: ${X}_{C} = 1 / 2 πfC$ where f equals the operating frequency in Hz, normally 50 or 60 Hz;
5. Noting that for X_{L} to be approximately equal but slightly larger than Xc, the following range is recommended: $0.4 R > {X}_{L} - {X}_{C} > 0 ;$ $2 π {fL}_{D} - 1 / 2 πfC < 0.4 R$ $2 π {fL}_{D} - 1 / 2 πfC > 0 ;$
6. Computing the desired cable capacitance (C) within this range: $1 / \left({\left(2πf\right)}^{2}{L}_{D}-2πf\left(0.4R\right)\right) > C > 1 / {\left(2πf\right)}^{2} {L}_{D} ;$
7. Using the tables below, suitable cable parameters can be chosen, which may result in revision of the number of wires or number of layers, in which case the cable choice can be refined;
8. Should all of the inductance not be able to be balanced, a cable that can balance as much as possible of L_{D} and carry its load is chosen;
9. If other elements of inductance are to be balanced. This can be taken account of by modifying the values of L_{D} and thus X_{L};
10. The resulting design is then modelled in simulation to validate the original inductance computation L_{D} and the resulting X_{L} and Xc which may suggest design revision. One or more further iterations may be required.

In order of magnitude terms, for a 15km cable, 120nF/m can balance a cable inductance of 375nH/m, which is typical for a 3 phase 33kV cable laid in trefoil. That said, it should be noted that if a different length of cable is concerned the effect of its length must be taken into account.

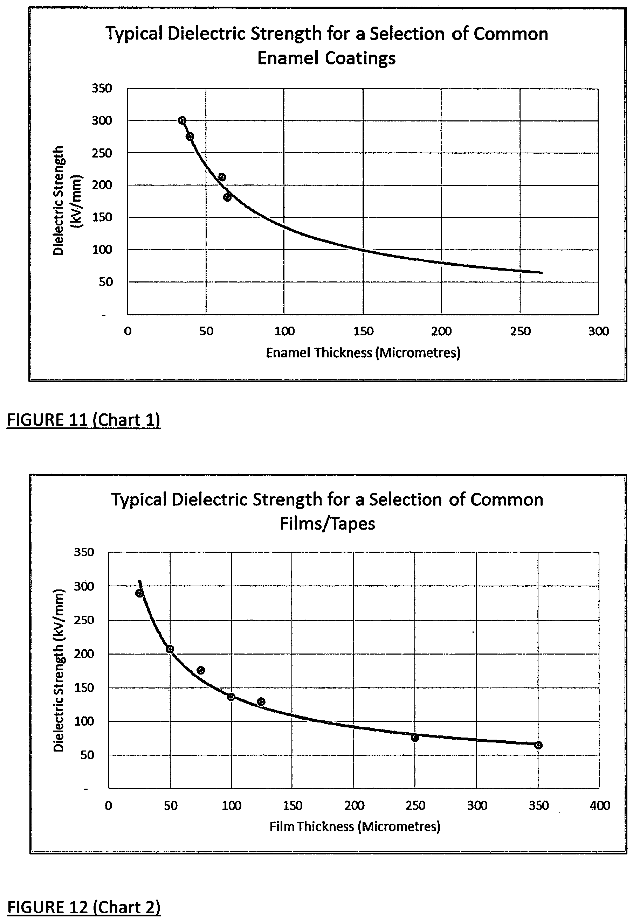

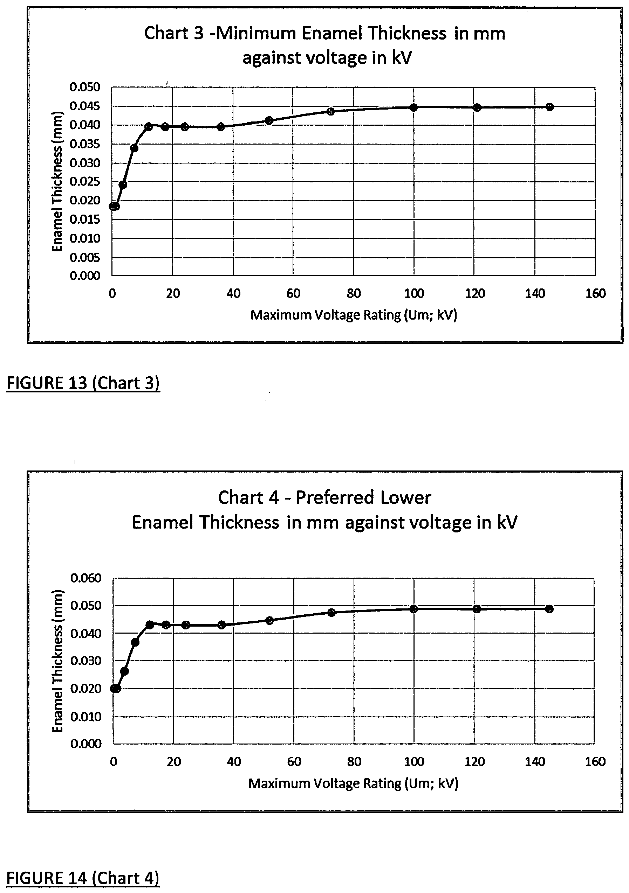

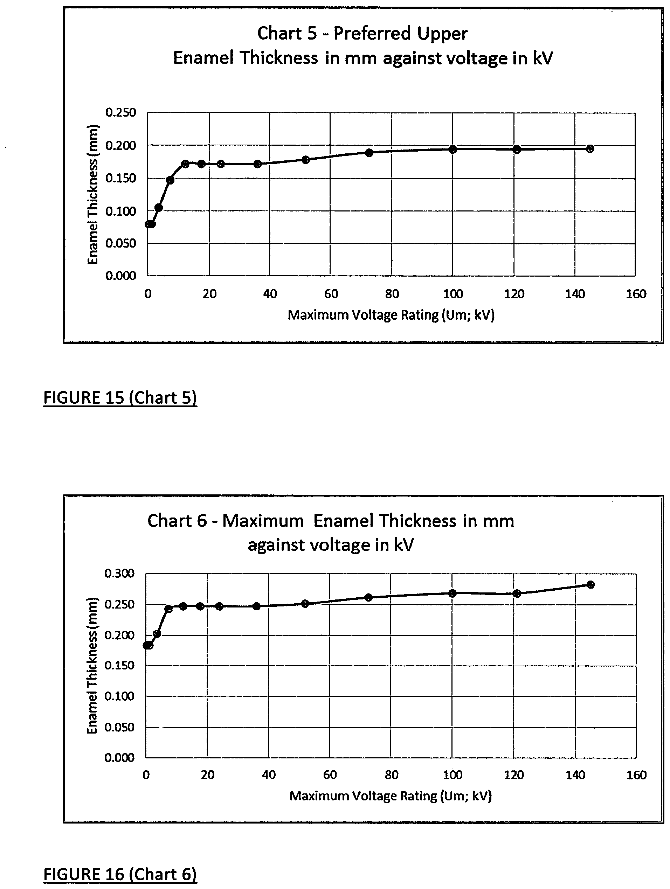

The above steps need to take account of the fact that even for magnet wire enamel, the withstand strength of a dielectric does not rise linearly with voltage, as shown in the Charts 1 to 6 (Figures 11 to 16).

The tables referred to are:

**Table 1 - Enamel Thickness in mm for Varying Maximum Voltage in kV**

| Maximum Voltage - kV | Minimum Thickness - mm | Preferred Lower Thickness - mm | Preferred Upper Thickness - mm | Maximum Thickness - mm |
|---|---|---|---|---|
| 3.6 | 0.024 | 0.026 | 0.105 | 0.202 |
| 7.2 | 0.034 | 0.037 | 0.148 | 0.242 |
| 12 | 0.040 | 0.043 | 0.172 | 0.247 |
| 17.5 | 0.040 | 0.043 | 0.172 | 0.247 |
| 24 | 0.040 | 0.043 | 0.172 | 0.247 |
| 36 | 0.040 | 0.043 | 0.172 | 0.247 |
| 52 | 0.041 | 0.045 | 0.179 | 0.251 |
| 72.5 | 0.044 | 0.047 | 0.190 | 0.262 |

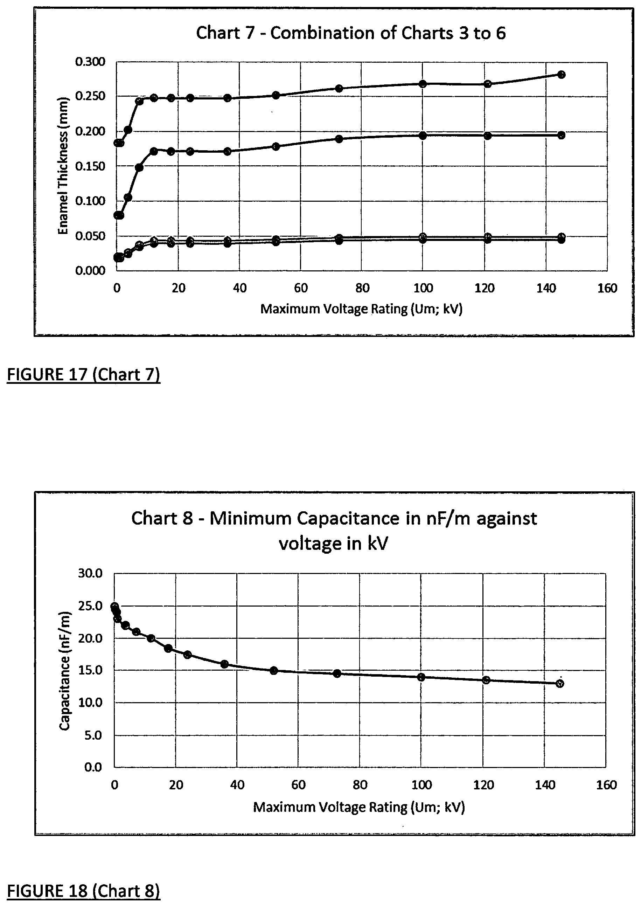

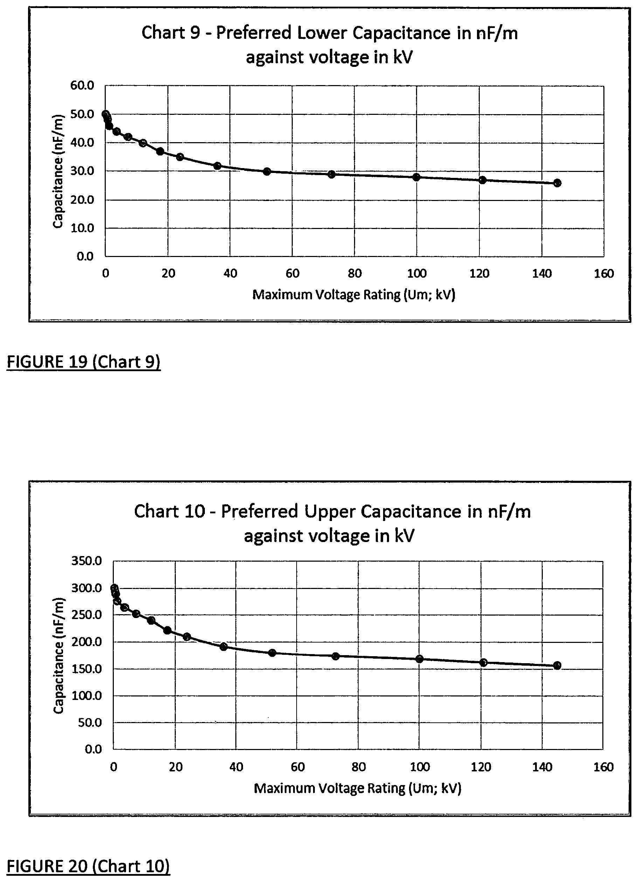

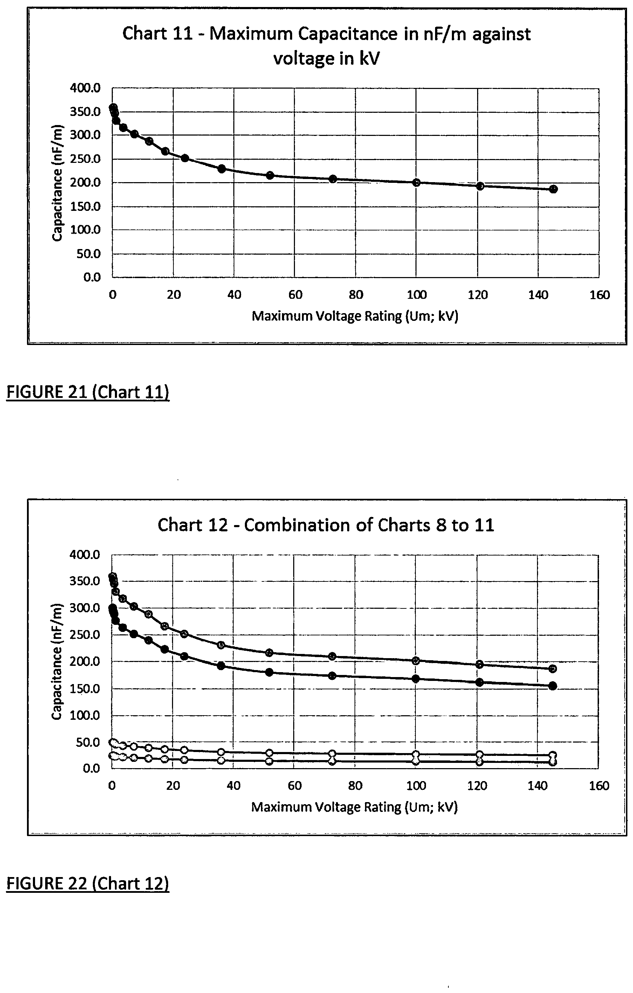

It will be noted that the Y-axis scale differs between the above charts and that the minimum and lower preferred plots are similar. To give an appreciation of their relative values, they can be combined as shown in Charts 7 to 12 (Figures 17 to 22), and in Tables 2 to 6 below.

**Table 2 - Dielectric Tape Thickness in mm for Varying Maximum Voltage in kV**

| Maximum Voltage - kV | Minimum Thickness - mm | Preferred Lower Thickness - mm | Preferred Upper Thickness - mm | Maximum Thickness - mm |
|---|---|---|---|---|
| 3.6 | 0.027 | 0.040 | 0.211 | 0.404 |
| 7.2 | 0.038 | 0.055 | 0.295 | 0.485 |
| 12 | 0.059 | 0.065 | 0.344 | 0.495 |
| 17.5 | 0.059 | 0.065 | 0.344 | 0.495 |
| 24 | 0.059 | 0.065 | 0.344 | 0.495 |
| 36 | 0.059 | 0.065 | 0.344 | 0.495 |
| 52 | 0.062 | 0.067 | 0.358 | 0.503 |
| 72.5 | 0.065 | 0.071 | 0.379 | 0.523 |

**Table 3 - Capacitance in nF/m for Varying Maximum Voltage in kV**

| Maximum Voltage - kV | Minimum Capacitance - nF/m | Preferred Lower Capacitance - nF/m | Preferred Upper Capacitance - nF/m | Maximum Capacitance - nF/m |
|---|---|---|---|---|
| 3.6 | 22.0 | 44.0 | 264.0 | 316.8 |
| 7.2 | 21.0 | 42.0 | 252.0 | 302.4 |
| 12 | 20.0 | 40.0 | 240.0 | 288.0 |
| 17.5 | 18.5 | 37.0 | 222.0 | 266.4 |
| 24 | 17.5 | 35.0 | 210.0 | 252.0 |
| 36 | 16.0 | 32.0 | 192.0 | 230.4 |
| 52 | 15.0 | 30.0 | 180.0 | 216.0 |
| 72.5 | 14.5 | 29.0 | 174.0 | 208.8 |

**Table 4 - Individual Strand Diameter in mm for Varying Maximum Voltage in kV**

| Maximum Voltage - kV | Minimum Strand Diameter - mm | Preferred Lower Strand Diameter - mm | Preferred Upper Strand Diameter - mm | Maximum Strand Diameter - mm |
|---|---|---|---|---|
| 3.6 | 0.50 | 0.60 | 2.50 | 3.00 |
| 7.2 | 0.50 | 0.60 | 2.50 | 3.00 |
| 12 | 0.50 | 0.60 | 3.00 | 4.00 |
| 17.5 | 0.50 | 0.60 | 3.00 | 4.00 |
| 24 | 0.50 | 0.60 | 3.00 | 4.00 |
| 36 | 0.50 | 0.60 | 3.50 | 4.50 |
| 52 | 0.50 | 0.70 | 3.50 | 4.50 |
| 72.5 | 0.70 | 0.80 | 4.00 | 5.00 |

**Table 5 - Number of Strands for Varying Maximum Voltage in kV**

| Maximum Voltage - kV | Minimum Number of Strands | Preferred Lower Number of Strands | Preferred Upper Number of Strands | Maximum Number of Strands |
|---|---|---|---|---|
| 3.6 | 19 | 37 | 271 | 397 |
| 7.2 | 19 | 37 | 271 | 397 |
| 12 | 19 | 37 | 397 | 547 |
| 17.5 | 19 | 37 | 397 | 547 |
| 24 | 19 | 37 | 397 | 547 |
| 36 | 19 | 37 | 397 | 547 |
| 52 | 19 | 37 | 397 | 547 |
| 72.5 | 19 | 37 | 397 | 547 |

**Table 6 - Number of Layers for Varying Maximum Voltage in kV**

| Maximum Voltage - kV | Minimum Number of Layers | Preferred Lower Number of Layers | Preferred Upper Number of Layers | Maximum Number of Layers |
|---|---|---|---|---|
| 3.6 | 3 | 4 | 10 | 12 |
| 7.2 | 3 | 4 | 10 | 12 |
| 12 | 3 | 4 | 12 | 14 |
| 17.5 | 3 | 4 | 12 | 14 |
| 24 | 3 | 4 | 12 | 14 |
| 36 | 3 | 4 | 12 | 14 |
| 52 | 3 | 4 | 12 | 14 |
| 72.5 | 3 | 4 | 12 | 14 |

The above tables and charts show values of variables for the most common power transmission voltages. The invention is not restricted to these voltages. Indeed, the following charts, which are based for the central portion of their graphs, show a wider range of voltages.

Both above described cables, including the variants, are connected in essentially the same way in that the strands of the one set, typically the red set, are bundled and at both ends and the strands of the other set are bundled in a like manner.

After division into respective bundles, the enamel is stripped from the ends of the strands. The stripped strands are inserted into respective terminal block and tightly clamped together, providing mechanical and more importantly electrical connection.

Turning now to Figures 6 to 10, connectors for a cable 1001 of the invention will now be described. All the red wires 1003 are bundled together. All the green wires 1004 are similarly bundled. The wires are similarly bundled at the other end of the cable. The enamel is removed from the ends of the bundled wires, suitably by dipping in solvent. The bundled ends are brought together in respective connectors 1007,1008. These have double-ended sockets 1009 for the bundles. Each end of the sockets has bores 1010 with clamping screws 1012 for the bundles of the cable. The bundled wires are inserted in the bores 1010 and clamped. This arrangement allows for the cable 1001 to be connected in parallel to other such cables with their red wires connected by the connectors to the red wires of the cable 1001 and the green wires similarly connected. For this the sockets have other end bores 1011 and other end clamping screws 1014. The bores 1011 could be through bores with the bores 1010. Their arrangement with un-bored middles ensures that neither set of wires takes up spaces intended for the other.

Where the cable is to be used as a single length between a supply and a load, the electrical connection of the cable is between the red wires and the green wires as an elongate capacitor, extending the length of the cable 1001. Respective supply and load cables/bus-bars 1015,1016 are clamped in the other bores 1011 of the red wire socket 1017 at one end of the cable and of the green wire socket 1018 at the other end. Thus the red wires 1003 are connected to the supply cable/bus-bar 1015 at the end 1005 and the green wires 1004 are connected to the load cable/bus-bar 1016 at the end 1006. There is no metal/metal contact between the supply cable/bus-bar 1015 and the load cable/bus-bar 1016.

The connectors have other, insulated single-ended sockets 1019 with a single bore 1020 and a single clamping screw 1021. The other wires, i.e. green wires at the supply end and the red wires at the load end, are received and clamped in these sockets. These wires are not connected by the sockets and are clamped purely for mechanical reasons in ensuring that they remain insulated. They do not need to be stripped of their insulating enamel, indeed leaving them enamelled assists in their identification. These insulated ends play no part in power transmission.

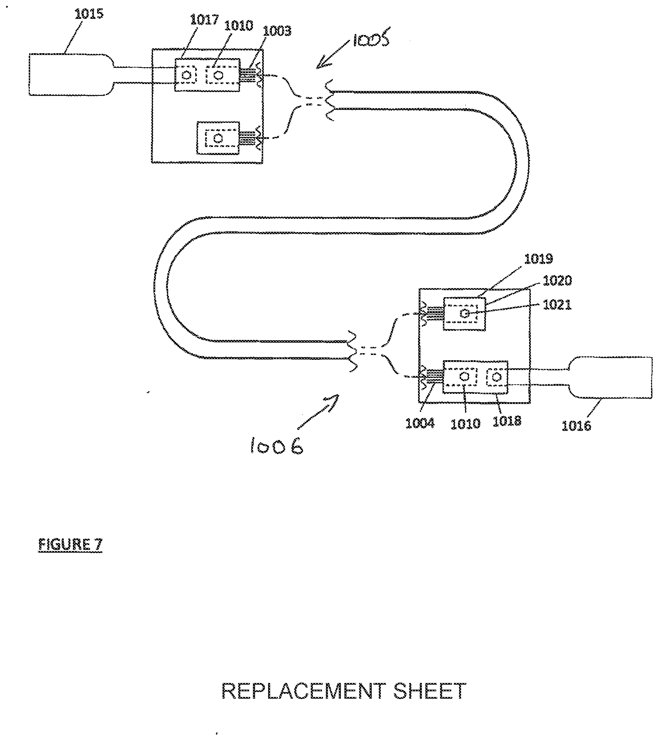

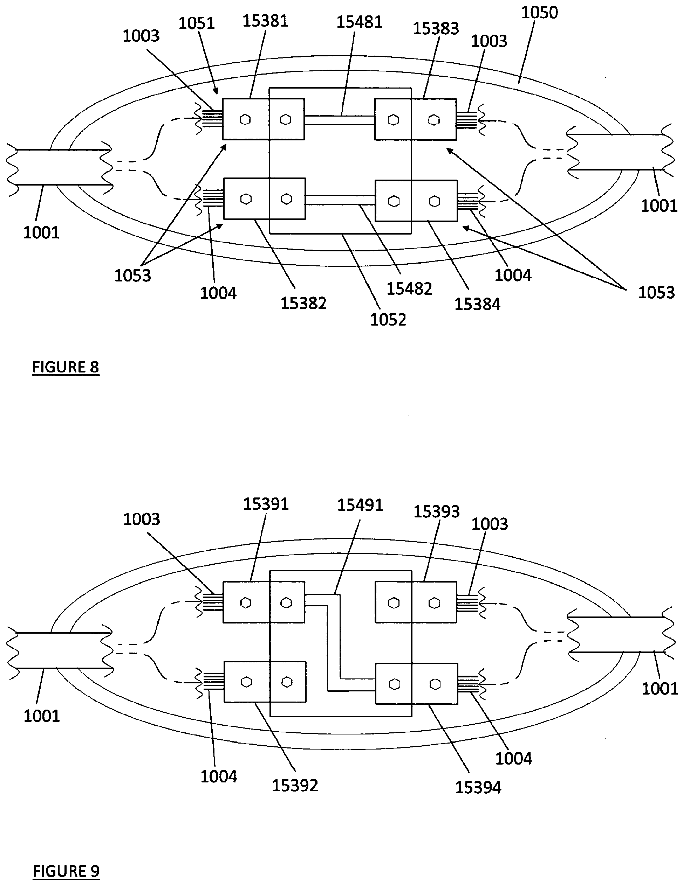

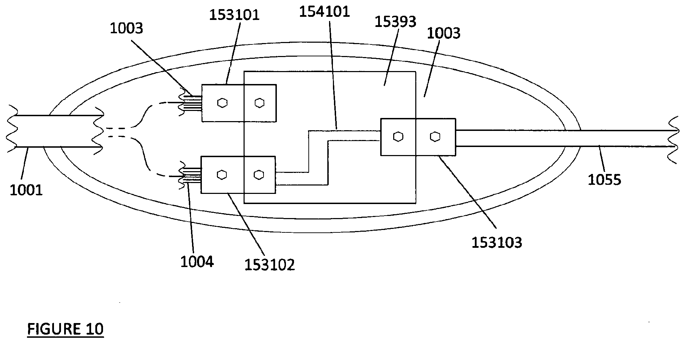

The connectors shown in Figures 6 and 7 are shown diagrammatically. Figures 8, 9 & 10 show more detail. They include a connector cover 1050 which is essentially conventional and filled in use with insulating material 1051. The actual connection arrangements comprise central blocks 1052 of insulating material having four sockets 1053, with bores and bolts for clamping the cable wires, extending from each end. There are three sockets in the case of Figure 10.

The sockets on one side are electrically connected internally to the sockets on the other side. This is by a short length of conventional cable, between internal bores and bolts. The connections are made first and then the blocks are formed around the connections.

In the case of Figure 8, the four sockets are connected in pairs, socket 15381 to socket 15383 and socket 15382 to socket 15384, via two short cable lengths 15481,15482. This connector allows two cables of the invention to be connected in parallel, with for instance the red wires 1003 of the cables being connected by sockets 15381,15383 and cable 15481 and the green wires 1004 by the sockets 15382,15384 and cable 15482.

In the case of Figure 9, the four sockets are connected in one pair, socket 15391 to socket 15394 via a short cable length 15491; whilst the sockets 15392, 15393 are unconnected. This connector allows two cables of the invention to be connected in series, with for instance the red wire of the cable being connected at sockets 15391, 15392 by the cable 15491 to the green wires of the cable connected at sockets 15393, 15394. The green wires of the first cable and the red wires of the second cable are merely anchored by the connectors 15392, 15393. The cable 15491 crosses from top to bottom to allow the red wires and the green wires on opposite sides to be connected at the same relative positions.

In the case of Figure 10, three sockets are provided with one internal cable 154101. On one side are sockets 153101,153102 for the incoming cable and on the other side is socket 153103 for an outgoing conventional cable 1055 to a supply or load. This allows both green wires of the incoming cables to be connected by the internal cable 154101 to the single socket 153103, with the red wires of the incoming cable to be anchored.

Similar connectors for aerial cables, with the additional feature of mechanical connection to the tension core can be provided.

If the capacitance of the combined lengths needs to be less, the connector can be a series connector as shown in Figure 9. With a red (cable A) to green connection (cable B) between the two cables, the free ends capacitance is between the green wires of cable A and the red wires of cable B. The capacitance is in effect of a single length with double the dielectric gap. It is given by the formula for capacitances in series:
Series Capacitances${C}_{total} = \frac{1}{\frac{1}{{C}_{1}} + \frac{1}{{C}_{2}} + … + \frac{1}{{C}_{n}}}$

Where the two lengths are identical, the capacitance is halved.

A feature of capacitances in series is that the voltage across individual ones is divided by the number of capacitances. This is useful in enabling a high voltage line to be comprised of three sections, each carrying 1/3 of the high voltage.

This has further advantages in reducing the thickness of the dielectric coating or tape/paper between the conductors. Thus, loss of capacitance by connection in series can be offset by higher capacitance per unit length in the first place.

In respect of the connectors, details can be altered. For instance, the bundled ends of the conductor wires may be preliminarily crimped before insertion in the sockets. Further the sockets themselves may be crimped as opposed to screwed, via oppositely arranged openings in the connector bodies which can be subsequently sealed closed.

The invention is not intended to be restricted to the details of the above described embodiment. For instance, more or less conductive layers can be provided. They can be provided as an even number as above or an uneven number of conductive cylinders with the inner and outer most interconnected. At the centre of the cable, a steel core can be provided for strength of the cable. Alternatively, or additionally, a hollow conduit may be provided centrally, for accommodating other elongate elements such as optical fibres for data transmission and/or temperature monitoring.

## Claims

1. A capacitive power transmission cable system comprising:
▪ a cable having at least two sets (121, 122) of conductive strands (123, 124), the conductive strands being
(i) laid in layers of opposite twist, with
(ii) the strands of one or more adjacent layers being of all one set and then radially outwards the strands of one or more adjacent layers being of all another set, and
▪ insulation (127) between the layers of different sets, whereby the at least two sets are in capacitive relation to each other, and
a first connector block (1007) and a second connector block (1008) connected in use to the sets of strands forming the cable at respective ends (1005,1006) of the cable;
**characterised in that**:
• the first connector block (1007) is provided with a first terminal (1017) connected in use to a supply and a second terminal (1019) isolated without a supply or load terminal;
• the second connector block (1008) is provided with a first terminal (1019) isolated without a supply or load terminal and a second terminal (1018) connected in use to a load;
• at least one set of strands is connected at one end of the cable (1005) to the first supply connection terminal (1017) of the first connector block (1007), and at the other end of the cable (1006) to the first isolated terminal (1019) of the second connector block (1008); and
• at least another set of strands is connected at one end of the cable (1005) to the second isolated terminal (1019) of the first connector block (1007), and at the other end of the cable (1006) to the second load connection terminal (1018) of the second connector block (1008).

2. A capacitive power transmission cable system as claimed in claim 1, wherein the individual strands are not insulated.

3. A capacitive power transmission cable system as claimed in claim 1 or claim 2, wherein the strands of one set are one colour and the strands of the other set are another colour.

4. A capacitive power transmission cable system as claimed in claim 3, wherein the individual strands are differently coloured as by one set being tinned and the other set being untinned.

5. A capacitive power transmission cable system as claimed in any preceding claim, wherein the interlayer insulation is of polymer tape.

6. A capacitive power transmission cable system as claimed in claim 5, wherein the interlayer insulation is between 25µm and 2.7mm thick.

7. A capacitive power transmission cable system as claimed in claim 6, wherein the interlayer insulation is between 30µm and 1.35mm thick.

8. A capacitive power transmission cable system as claimed in any previous claim, wherein the amount of conductor is modified at either end by increasing the proportion of one set at one end and the other set at the other end.

9. A capacitive power transmission cable system as claimed in claim 8, wherein the modification at either end comprises reducing the number of strands in one set and increasing the number of strands in the other.

10. A capacitive power transmission cable system as claimed in claim 8, wherein the modification at either end comprises an extra, outer layer of one set at one end and of the other set at the other end.

11. A capacitive power transmission cable system as claimed in any of claims 8-10, wherein the modified ends are 250m to 400m in length.

12. A capacitive power transmission cable system as claimed in any previous claim, having a minimum conductor cross-sectional area of 50mm².

13. Use of a capacitive power transmission cable system for transmitting power according to claims 1 to 12.

14. Use of a capacitive power transmission cable system as claimed in claim 13, wherein the amount of conductor is modified at either end by increasing the proportion of one set at one end and the other set at the other end.

15. Use of a capacitive power transmission cable system as claimed in claim 14, wherein the modification at either end comprises reducing the number of strands in one set and increasing the number of strands in the other.

## Patentansprüche

1. Kapazitives Leistungsübertragungskabelsystem, umfassend:
▪ ein Kabel mit zumindest zwei Sätzen (121, 122) von leitenden Strängen (123, 124), wobei die leitenden Stränge
(i) in Schichten mit entgegengesetzter Drehung gelegt sind, wobei
(ii) die Stränge von einer oder mehreren benachbarten Schichten alle von einem Satz sind und dann radial nach außen die Stränge von einer oder mehreren benachbarten Schichten alle von einem anderen Satz sind, und
▪ Isolierung (127) zwischen den Schichten von verschiedenen Sätzen, wobei die zumindest zwei Sätze in kapazitiver Beziehung zueinander sind, und
einen ersten Verbinderblock (1007) und einen zweiten Verbinderblock (1008), die in Verwendung mit den Sätzen von Strängen, die das Kabel an jeweiligen Enden (1005, 1006) des Kabels bilden, verbunden sind;
**dadurch gekennzeichnet, dass**:
• der erste Verbinderblock (1007) mit einem ersten Anschluss (1017), der in Verwendung mit einer Versorgung verbunden ist, und einem zweiten Anschluss (1019), der ohne einen Versorgungs- oder Lastanschluss isoliert ist, bereitgestellt ist;
• der zweite Verbinderblock (1008) mit einem ersten Anschluss (1019), der ohne einen Versorgungs- oder Lastanschluss isoliert ist, und einem zweiten Anschluss (1018), der in Verwendung mit einer Last verbunden ist, bereitgestellt ist;
• zumindest ein Satz von Strängen an einem Ende des Kabels (1005) mit dem ersten Versorgungsverbindungsanschluss (1017) des ersten Verbinderblocks (1007) und an dem anderen Ende des Kabels (1006) mit dem ersten isolierten Anschluss (1019) des zweiten Verbinderblocks (1008) verbunden ist; und
• zumindest ein anderer Satz von Strängen an einem Ende des Kabels (1005) mit dem zweiten isolierten Anschluss (1019) des ersten Verbinderblocks (1007) und an dem anderen Ende des Kabels (1006) mit dem zweiten Lastverbindungsanschluss (1018) des zweiten Verbinderblocks (1008) verbunden ist.

2. Kapazitives Leistungsübertragungskabelsystem nach Anspruch 1, wobei die einzelnen Stränge nicht isoliert sind.

3. Kapazitives Leistungsübertragungskabelsystem nach Anspruch 1 oder Anspruch 2, wobei die Stränge von einem Satz eine Farbe sind und die Stränge von dem anderen Satz eine andere Farbe sind.

4. Kapazitives Leistungsübertragungskabelsystem nach Anspruch 3, wobei die einzelnen Stränge unterschiedlich gefärbt sind, da ein Satz verzinnt ist und der andere Satz unverzinnt ist.

5. Kapazitives Leistungsübertragungskabelsystem nach einem vorhergehenden Anspruch, wobei die Zwischenschichtisolierung aus Polymerband ist.

6. Kapazitives Leistungsübertragungskabelsystem nach Anspruch 5, wobei die Zwischenschichtisolierung zwischen 25 µm und 2,7 mm dick ist.

7. Kapazitives Leistungsübertragungskabelsystem nach Anspruch 6, wobei die Zwischenschichtisolierung zwischen 30 µm und 1,35 mm dick ist.

8. Kapazitives Leistungsübertragungskabelsystem nach einem vorhergehenden Anspruch, wobei die Leitermenge an jedem Ende durch Erhöhen des Anteils von einem Satz an einem Ende und dem anderen Satz an dem anderen Ende modifiziert wird.

9. Kapazitives Leistungsübertragungskabelsystem nach Anspruch 8, wobei die Modifikation an jedem Ende Reduzieren der Anzahl an Strängen in einem Satz und Erhöhen der Anzahl an Strängen in dem anderen umfasst.

10. Kapazitives Leistungsübertragungskabelsystem nach Anspruch 8, wobei die Modifikation an jedem Ende eine zusätzliche äußere Schicht von einem Satz an einem Ende und von dem anderen Satz an dem anderen Ende umfasst.

11. Kapazitives Leistungsübertragungskabelsystem nach einem der Ansprüche 8-10, wobei die modifizierten Enden 250 m bis 400 m lang sind.

12. Kapazitives Leistungsübertragungskabelsystem nach einem vorhergehenden Anspruch, das eine minimale Leiterquerschnittsfläche von 50 mm² aufweist.

13. Verwendung eines kapazitiven Leistungsübertragungskabelsystems zum Übertragen von Leistung nach Anspruch 1 bis 12.

14. Verwendung eines kapazitiven Leistungsübertragungskabelsystems nach Anspruch 13, wobei die Leitermenge an jedem Ende durch Erhöhen des Anteils von einem Satz an einem Ende und dem anderen Satz an dem anderen Ende modifiziert wird.

15. Verwendung eines kapazitiven Leistungsübertragungskabelsystems nach Anspruch 14, wobei die Modifikation an jedem Ende Reduzieren der Anzahl an Strängen in einem Satz und Erhöhen der Anzahl an Strängen in dem anderen umfasst.

## Revendications

1. Système de câble de transmission de puissance capacitif comprenant :
• un câble comportant au moins deux ensembles (121, 122) de brins conducteurs (123, 124), les brins conducteurs étant
(i) posés en couches de torsion opposée, avec
(ii) les brins d'une ou plusieurs couches adjacentes étant tout un ensemble et ensuite radialement vers l'extérieur les brins d'une ou plusieurs couches adjacentes étant tout un autre ensemble, et
• l'isolation (127) entre les couches de différents ensembles, moyennant quoi les au moins deux ensembles sont en relation capacitive l'un avec l'autre, et
un premier bloc connecteur (1007) et un second bloc connecteur (1008) connectés lors de l'utilisation aux ensembles de brins formant le câble au niveau d'extrémités respectives (1005, 1006) du câble ;
**caractérisé en ce que** :
• le premier bloc connecteur (1007) est pourvu d'une première borne (1017) connectée lors de l'utilisation à une alimentation et d'une seconde borne (1019) isolée sans borne d'alimentation ou de charge ;
• le second bloc connecteur (1008) est pourvu d'une première borne (1019) isolée sans borne d'alimentation ou de charge et d'une seconde borne (1018) connectée lors de l'utilisation à une charge ;
• au moins un ensemble de brins est connecté au niveau d'une extrémité du câble (1005) à la première borne de connexion d'alimentation (1017) du premier bloc connecteur (1007), et au niveau de l'autre extrémité du câble (1006) à la première borne isolée (1019) du second bloc connecteur (1008) ; et
• au moins un autre ensemble de brins est connecté au niveau d'une extrémité du câble (1005) à la seconde borne isolée (1019) du premier bloc connecteur (1007), et au niveau de l'autre extrémité du câble (1006) à la seconde borne de connexion de charge (1018) du second bloc connecteur (1008).

2. Système de câble de transmission de puissance capacitif selon la revendication 1, lesdits brins individuels n'étant pas isolés.

3. Système de câble de transmission de puissance capacitif selon la revendication 1 ou la revendication 2, lesdits brins d'un ensemble étant d'une couleur et lesdits brins de l'autre ensemble étant d'une autre couleur.

4. Système de câble de transmission de puissance capacitif selon la revendication 3, lesdits brins individuels étant colorés différemment tel un ensemble étant étamé et l'autre ensemble n'étant pas étamé.

5. Système de câble de transmission de puissance capacitif selon une quelconque revendication précédente, ledit isolant intercouche étant un ruban polymère.

6. Système de câble de transmission de puissance capacitif selon la revendication 5, ladite isolation intercouche possédant une épaisseur comprise entre 25 µm et 2,7 mm.

7. Système de câble de transmission de puissance capacitif selon la revendication 6, ladite isolation intercouche possédant une épaisseur comprise entre 30 µm et 1,35 mm.

8. Système de câble de transmission de puissance capacitif selon une quelconque revendication précédente, ladite quantité de conducteur étant modifiée au niveau de chaque extrémité en augmentant la proportion d'un ensemble au niveau d'une extrémité et de l'autre ensemble au niveau de l'autre extrémité.

9. Système de câble de transmission de puissance capacitif selon la revendication 8, ladite modification au niveau de chaque extrémité comprenant la réduction du nombre de brins d'un ensemble et l'augmentation du nombre de brins de l'autre ensemble.

10. Système de câble de transmission de puissance capacitif selon la revendication 8, ladite modification au niveau de chaque extrémité comprenant une couche externe supplémentaire d'un ensemble au niveau d'une extrémité et de l'autre ensemble au niveau de l'autre extrémité.

11. Système de câble de transmission de puissance capacitif selon l'une quelconque des revendications 8-10, lesdites extrémités modifiées étant d'une longueur de 250 m à 400 m.

12. Système de câble de transmission de puissance capacitif selon une quelconque revendication précédente, possédant une superficie de section transversale de conducteur minimale de 50 mm².

13. Utilisation d'un système de câble de transmission de puissance capacitif pour transmettre de la puissance selon les revendications 1 à 12.

14. Utilisation d'un système de câble de transmission de puissance capacitif selon la revendication 13, ladite quantité de conducteur étant modifiée au niveau de chaque extrémité en augmentant la proportion d'un ensemble au niveau d'une extrémité et de l'autre ensemble au niveau de l'autre extrémité.

15. Utilisation d'un système de câble de transmission de puissance capacitif selon la revendication 14, ladite modification au niveau de chaque extrémité comprenant la réduction du nombre de brins d'un ensemble et l'augmentation du nombre de brins de l'autre ensemble.
